# EUROPEAN PATENT APPLICATION

(11) **EP 4 350 591 A1**
(43) Date of publication of application: **10.04.2024**
(21) Application number: 23193195.7
(22) Date of filing: 24.08.2023
(51) Int. Cl.: G06Q 10/0631, G06Q 10/0639, G06Q 50/40, B60W 30/00, B60W 40/02, B60W 40/08, B60W 60/00

(54) **METHOD AND APPARATUS FOR MANAGING REMOTE SERVICE FIELD**

(30) Priority: 07.10.2022 JP 2022162482
(71) Applicant: TOYOTA JIDOSHA KABUSHIKI KAISHA, Toyota-shi, Aichi-ken, 471 8571 (JP)
(72) Inventor: URANO, Hiromitsu, Tokyo, 103-0022 (JP)
(74) Representative: J A Kemp LLP

(57) **Abstract**

A method for managing a remote service for mobile objects (VHm) is provided. The method includes the step of determining, when a request for close (RFC) of a business (SB) of the remote service is received, whether the request for close is to be accepted. The service business includes a first business which affects travel efficiency of an object for which the remote service is provided and a second business which does not affect the travel efficiency. In the step of determining the request for close, when the request for close is a request for close of the second business, a determination is made as to whether a start of the first business to the object of the second business is expected. In addition, when it is determined that a start of the first business is expected, acceptance of the request for close of the second business is rejected.

## Description

### FIELD

The present disclosure relates to a method and an apparatus for managing a remote service for mobile objects.

### BACKGROUND

JP 2018-142265 A discloses a method for managing a remote service of self-driving vehicles. In this conventional method, when it is determined that a given self-driving vehicle needs to be remotely operated, an operator on standby is selected from a plurality of operators and remote operation is assigned to the selected operator. Therefore, according to the convention method, a remote service of a plurality of self-driving vehicles can be efficiently run by a small number of operators.

JP 2021-144732 A is an example of a document describing a level of technology of a technical field related to the present disclosure besides JP 2018-142265 A.

### LIST OF RELATED ARTS

Patent Literature 1: JP 2018-142265 A
Patent Literature 2: JP 2021-144732 A

### SUMMARY

An operator who performs a remote operation of a mobile object such as a self-driving vehicle acquires information related to the mobile object in the remote operation to comprehend surroundings of the mobile object and contents of a task of remote operation that is required of the operator. Information related to the mobile object includes sensor information represented by a camera image acquired by a camera mounted to the mobile object. The sensor information is typically visualized and output to a display. Output of the sensor information to the display is expected to facilitate early comprehension of the surroundings of the mobile object and the like.

However, it is inevitable that the time required by an operator having been on standby for a remote operation to comprehend the surroundings and the like is longer than the time required to comprehend the surroundings and the like by a driver sitting on a driver's seat of the mobile object. This is because, while the driver is expected to constantly comprehend surroundings of a mobile object being driven by the driver, it is unrealistic to expect an operator having been on standby for a remote operation to have a same degree of comprehension of the surroundings as the comprehension by the driver.

Requiring an operator having been on standby for a remote operation to have a same degree of comprehension of the surroundings as the comprehension by the driver leads to a reduction in a business processing amount per unit time by the operator and rising labor costs and is, therefore, undesirable. In addition, when selecting one operator from a plurality of operators and assigning a remote operation to the selected operator, there is also an aspect that it is substantially impossible for each operator to comprehend information related to a mobile object that needs to be remotely operated even before a determination is made that a remote operation is necessary.

An object of the present disclosure is to provide a technique that enables a remote service of mobile objects including remote operations to be run smoothly when the remote service is to be provided by a plurality of operators.

A first aspect of the present disclosure is a method for managing a remote service for mobile objects and has the following features.

The method comprises the step of:
determining, when receiving a request for close of a business of the remote service, whether or not to accept the request for close; and
transmitting a result of the determination of the request for close to a terminal of an operator having transmitted the request for close.
The business of the remote service includes a first business which affects travel efficiency of an object for which the remote service is provided and a second business which does not affect the travel efficiency.

The step of determining the request for close includes the steps of:
determining, when the request for close is a request for close of the second business, whether or not a start of the first business to the object of the second business is expected; and
rejecting acceptance of the request for close of the second business when it is determined that the start of the first business is expected.

A second aspect of the present disclosure is an apparatus for managing a remote service for mobile objects and has the following features.

The apparatus comprises a processor configured to manage the remote service.

The processor is configured to execute:
processing to determine, when receiving a request for close of a business of the remote service, whether or not to accept the request for close; and
processing to transmit a result of the determination of the request for close to a terminal of an operator having transmitted the request for close.

The business of the remote service includes a first business which affects travel efficiency of an object for which the remote service is provided and a second business which does not affect the travel efficiency.

In the processing to determine acceptance of the request for close, the processor is configured to execute:
processing to determine, when the request for close is a request for close of the second business, whether or not a start of the first business to the object of the second business is expected; and
processing to reject acceptance of the request for close of the second business when it is determined that the start of the first business is expected.

According to the present disclosure, when a request for close of a business of a remote service is received, a determination is made as to whether or not the request for close is to be accepted. When the request for close is a request for close of a second business which does not affect travel efficiency of the object for which the remote service is provided, a determination is made as to whether or not a start of a first business which affects travel efficiency of the object is expected. In addition, when it is determined that a start of the first business is expected, acceptance of the request for close of the second business is rejected.

When acceptance of a request for close of the second business is rejected, the second business is continued. Therefore, when a first business occurs in the near future, the first business can be assigned to an operator engaged in the second business. Therefore, the time required by the operator to comprehend surroundings of the object of the remote service and the like can be reduced. As a result, a contribution is expected to be made towards smoothly running a remote service when the remote service is to be provided by a plurality of operators.

### BRIEF DESCRIPTION OF DRAWINGS

FIG. 1 is a conceptual diagram illustrating a remote service;
FIG. 2 is a diagram showing an example of an image that is output from a display of a terminal operated by an operator;
FIG. 3 a diagram showing another example of the image that is output from the display of the terminal operated by the operator;
FIG. 4 is a diagram showing an example of the image that is output from the display when a first task for a vehicle is assigned, corresponding to two different states of the operator before this assignment;
FIG. 5 is an example of an image that is output from the display when a request for close to a second business is accepted;
FIG. 6 is a block diagram showing a functional configuration example of a processor of a management server particularly related to an embodiment;
FIG. 7 is a flow chart showing a flow of processing particularly related to the embodiment by the management server;
FIG. 8 is a block diagram showing a second functional configuration example of the processor of the management server particularly related to the embodiment; and
FIG. 9 is a flow chart showing a flow of processing particularly related to the embodiment by the management server.

### DESCRIPTION OF EMBODIMENTS

Hereinafter, a method and an apparatus for managing a remote service according to embodiments of the present disclosure will be described with reference to the drawings. The management method according to the embodiments is realized by computer processing carried out by the management apparatuses according to the embodiments. In addition, same or corresponding portions in each drawing will be denoted by same reference signs and descriptions thereof will be simplified or omitted.

### 1. Overview

### 1-1. Remote service

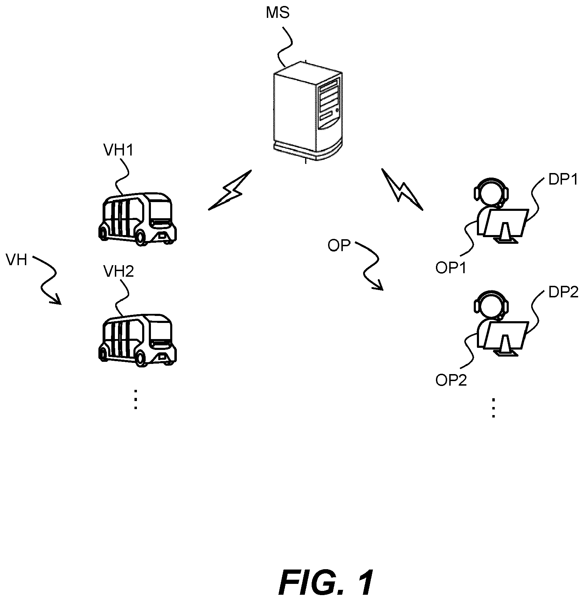

Fig. 1 is a conceptual diagram illustrating a remote service. Fig. 1 shows a management server MS, a plurality of vehicles VH, and a plurality of operators OP.

The management server MS is an example of the management apparatus according to the embodiment. The management server MS manages the remote service. Typically, the management server MS is managed by a business operator of the remote service. The management server MS communicates with the plurality of vehicles VH and the plurality of operators OP.

Each of the plurality of vehicles VH is an example of the mobile object according to the embodiment. Each of the plurality of vehicles VH is an object for which the remote service is provided. A part of or all of the plurality of vehicles VH may be vehicles owned by the business operator of the remote service or vehicles owned by a corporation or an individual having entered into an agreement with the business operator to be provided with the remote service. The total number of the plurality of vehicles VH is M (M ≥ 2). Hereinafter, for convenience of description, any one vehicle among the plurality of vehicles VH will be referred to as a "vehicle VHm". While a configuration of the vehicle VHm is not particularly limited, the vehicle VHm is desirably configured to be capable of autonomous travel.

Each of the plurality of operators OP performs a service business (SB) to the object for which the remote service is provided. The plurality of operators OP may be employees of the business operator providing the remote service or employees of a corporation or individuals having entered into an outsourcing agreement with the business operator. The total number of the plurality of operators OP is N (N ≥ 2). Hereinafter, for convenience of description, any one operator among the plurality of operators OP will be referred to as an "operator OPn".

### 1-2. Service business

The service business SB performed by the operator OPn includes a first business SB1 and a second business SB2. These businesses can be distinguished from one another based on, for example, whether or not an execution of the business affects travel efficiency of the vehicle VHm. For example, the first business SB1 is a service business SB which affects travel efficiency and the second business SB2 is a service business SB which does not affect travel efficiency. "Travel efficiency" as used herein refers to, for example, a proportion of an outcome with respect to an amount of execution of the service business SB performed by the operator OPn and an example of the outcome is a time point at which the vehicle VHm arrives at a destination point.

An example of the first business SB 1 is an operation business. Operation businesses include a driving business, a command business, and an assistance business. The driving business is a business involving operating apparatuses (for example, a steering wheel, a pedal, a gear shift, and turn signals of the vehicle VHm) directly or indirectly related to travel of the vehicle VHm while monitoring a peripheral image of the vehicle VHm acquired from a camera (hereinafter, also referred to as a "car-mounted camera") mounted to the vehicle VHm.

The command business is not a business for the purpose of operating apparatuses related to travel of the vehicle VHm. However, in the command business, information related to the travel of the vehicle VHm is generated and the vehicle VHm is provided with the information. For example, let us consider a case where road debris is present ahead of the vehicle VHm and the operator OPn is requested to determine what kind of travel the vehicle VHm should perform. In this case, a business in which the operator OPn having recognized the road debris generates command information such as "follow the road" or "steer around the obstacle" is included in the command business. In addition, let us consider a case where it is difficult for the vehicle VHm to recognize a traffic light due to backlight or the like and the operator OPn is requested to perform the recognition. In this case, a business in which the operator OPn having recognized the traffic light generates recognition information that reads "the traffic light is green" is also included in the command business.

In a similar manner to the command business, in the assistance business, the vehicle VHm is provided with information related to the travel of the vehicle VHm. Unlike the command business, in the assistance business, information that takes driving experience and driving knowledge of the operator OPn (human) into consideration is generated and the vehicle VHm is provided with the information. For example, let us consider a case where the vehicle VHm about to turn right at an intersection without a traffic light encounters an oncoming vehicle about to turn right at the same intersection, and the operator OPn is requested to determine at what timing the right turn should be made. In this case, a business in which the operator OPn having recognized the driver of the oncoming vehicle or a gesture performed by the driver generates assistance information that reads "give precedence to the right turn of the oncoming vehicle since the oncoming vehicle is about to start" or "turn right first since the driver of the oncoming vehicle is yielding precedence" is included in the assistance business.

An example of the second business SB2 is a monitoring business. The monitoring business includes a business of monitoring a peripheral image of the vehicle VHm acquired from a car-mounted camera and verifying travel safety of the vehicle VHm. The car-mounted camera may include a camera for acquiring an interior image of the vehicle VHm. The monitoring business in this case includes a business of monitoring an interior image of the vehicle VHm acquired from the car-mounted camera and verifying a state of an occupant (for example, the driver) of the vehicle VHm. While various images acquired from the car-mounted camera are typically moving images, still images may be acquired instead.

The monitoring business may include a business of monitoring a visualized image of a surrounding object acquired from a recognition sensor (for example, LiDAR mounted to the vehicle VHm) other than the car-mounted camera. The monitoring business may include a business of monitoring an image of a traffic flow acquired from a camera attached to a road structure (for example, a traffic light installed at an intersection) or a visualized image of the traffic flow acquired from a recognition sensor (for example, an infrared sensor) other than a camera and indirectly verifying travel safety of the vehicle VHm. Hereinafter, a camera and a recognition sensor mounted to a road structure will be collectively referred to as an "infrastructure sensor".

The monitoring business may include a business of monitoring travel information of the vehicle VHm acquired from a state sensor (for example, an acceleration sensor or a steering angle sensor) mounted to the vehicle VHm. The monitoring business may include a business of listening to sound information (for example, sound outside of the vehicle or a conversation among occupants) of the vehicle VHm acquired from a microphone (for example, an exterior microphone or an interior microphone) mounted to the vehicle VHm.

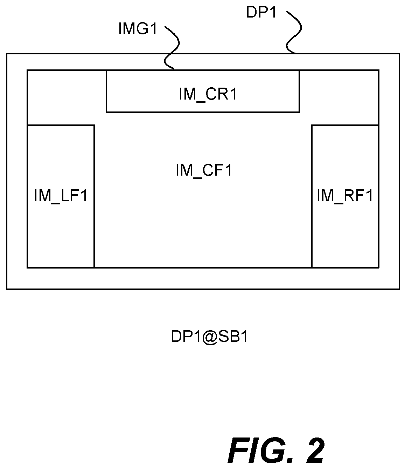

Images of a car-mounted camera, a recognition sensor, and the like which are monitored by the operator OP in the first and second businesses SB 1 and SB2 are output from a display DPn of a terminal operated by the operator OPn. Fig. 2 is a diagram showing an example of an image IMG1 that is output from a display DP1 of a terminal operated by an operator OP1. In the example shown n Fig. 2, the image IMG1 includes an image IM_CF1. The image IM_CF1 is an image of center front of a vehicle VH1 acquired by a car-mounted camera of the vehicle VH1.

In addition, an image IM_LF1 is superimposed on a leftward portion of the image IM_CF1 and an image IM_RF1 is superimposed on a rightward portion of the image IM_CF1. The image IM_LF1 is an image of left front of the vehicle VH1 acquired by the car-mounted camera of the vehicle VH1, and the image IM_RF1 is an image of right front of the vehicle VH1 acquired by the car-mounted camera of the vehicle VH1. In addition, an image IM_CR1 is superimposed on an upward part of the image IM_CF1. The image IM_CR1 is an image of center rear of the vehicle VH1 acquired by the car-mounted camera of the vehicle VH1.

The image IMG1 shown in Fig. 2 corresponds to an image example output from the display DP1 when the operator OP1 performs the first business SB1. The image IMG1 may include a peripheral image of the vehicle VH1 (for example, an image of the side of the vehicle VH1) other than the images shown in Fig. 2. In addition, the display DP1 may be constituted of two or more displays. In this case, the images IM_LF1, IM_RF1, and IM_CR1 may be output from a display other than the display that outputs the image IM_CF1.

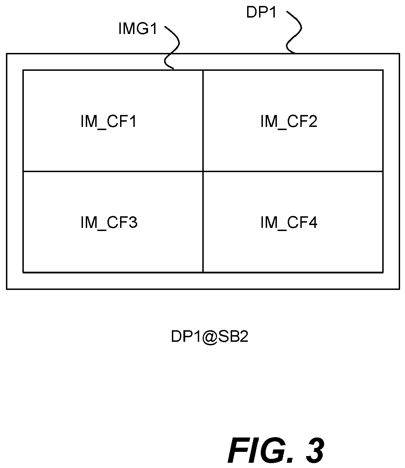

Fig. 3 is a diagram showing another example of the image IMG1 that is output from the display DP1 of the terminal operated by the operator OP1. The image IMG1 shown in Fig. 3 corresponds to an image example output from the display DP1 when the operator OP1 performs the second business SB2. In the example shown in Fig. 3, a display region of the display DP1 is divided into four regions and images IM_CF1 to IM_CF4 are respectively output to the regions. The images IM_CF2 to IM_CF4 are respective images of center front of vehicles VH2 to VH4 acquired by car-mounted cameras of the vehicles VH2 to VH4.

As is apparent from Fig. 3, the second business SB2 includes a business of monitoring peripheral images of two or more vehicles VH and concurrently verifying travel safety of the vehicles VH. This is because, while an operator OPn in charge of the first business SB1 of the vehicle VHm is expected to concentrate on the first business SB1 or forbidden to engage in service businesses SB other than the first business SB1, there are fewer such constraints with respect to the second business SB2. The example shown in Fig. 3 is merely an example and only information related to one vehicle (in other words, information related to the vehicle VHm) may be output from the display DPn during the second business SB2 by the operator OPn.

### 1-3. Start trigger of service business SB

The service business SB by the operator OPn is started following an output of a trigger. Examples of an output source of a start trigger TRG of the service business SB include the vehicle VHm, the operator OPn, the management server MS, and an arbitrary predictor. Hereinafter, the output sources described above and output examples of the start trigger TRG by the output sources will be described.

The vehicle VHm performs recognition of an object included in a peripheral image of the vehicle VHm. In addition, the vehicle VHm performs detection of a motion of a recognized object. For example, when it is difficult to recognize an object included in the peripheral image, the vehicle VHm requests the management server MS to perform recognition of the object. At this point, the start trigger TRG is output. In another example, when recognition of an object has been performed but an unnatural motion of the object has been detected, the vehicle VHm requests the management server MS to perform verification of a state of the object. The start trigger TRG is also output at this point.

The vehicle VHm may perform recognition of a state of an occupant (driver) included in an interior image of the vehicle VHm. In addition, when an abnormal state of the driver is detected, the vehicle VHm may request the management server MS to perform verification of the abnormal state. The start trigger TRG is also output at this point. The vehicle VHm may perform detection of a motion of an object in a periphery of the vehicle VHm based on information from a recognition sensor other than a car-mounted camera. In addition, when an unnatural motion of the object has been detected, the vehicle VHm may request the management server MS to perform verification of a state of the object. The start trigger TRG is also output at this point.

The operator OPn on standby for a service business SB starts the second business SB2 to the vehicle VHm at an arbitrary timing. An example of the arbitrary timing is a timing at which the operator OPn starts the service business SB. Another example of the arbitrary timing is a timing at which the first business SB 1 to the vehicle VHm by the operator OPn is brought to a close. In such a case, the operator OPn makes a request for the second business SB2 to the management server MS. At this point, the start trigger TRG is output.

When engaged in the second business SB2, the operator OPn monitors a peripheral image of at least one vehicle output from the display DPn. In addition, the operator OPn may monitor information other than a peripheral image (for example, an interior image, recognition sensor information, a traffic flow image, or travel information). Furthermore, the operator OPn can listen to information (in other words, sound information) related to at least one vehicle output from a speaker. In addition, during the second business SB2, when the operator OPn determines that the first business SB 1 to a single given vehicle is necessary, the operator OPn makes a request for the service business SB to the management server MS. At this point, the start trigger TRG is output.

The output of the start trigger TRG can be detected by the management server MS. For example, when the vehicle VHm is the output source, the start trigger TRG is detected by having the management server MS receive a request signal for the service business SB from the vehicle VHm. When the operator OPn engaged in the second business SB2 is the output source, the start trigger TRG is detected by having the management server MS receive a request signal for the first business SB 1 from the operator OPn.

The management server MS can appropriately acquire an image (for example, a peripheral image or an interior image) taken by the car-mounted camera of the vehicle VHm. Therefore, when an object recognition function or a driver state recognition function included in the vehicle VHm has been provided, the management server MS can perform recognition of an object included in a peripheral image of the vehicle VHm, detection of a motion of the recognized object, and recognition of a state of the driver of the vehicle VHm. In addition, the management server MS can appropriately acquire information (for example, recognition sensor information, a traffic flow image, travel information, and sound information) other than images taken by the car-mounted camera. Therefore, when a start determination function of the service business SM has been provided, the management server MS can actively output the start trigger TRG.

When the vehicle VHm is in operation, the management server MS may output the start trigger TRG of the second business SB2 to the vehicle VHm every time a predetermined period of time elapses. In addition, when the vehicle VHm is in operation, the management server MS may output the start trigger TRG of the second business SB2 to the vehicle VHm every time a cumulative travel distance of the vehicle VHm reaches a distance to be a delimiter. In addition, at the start of operation of the vehicle VHm or when the vehicle VHm is stopped, the management server MS may output the start trigger TRG of the first business SB 1 in order to verify operations of various apparatuses (for example, verification of lighting) of the vehicle VHm. Furthermore, at the start of operation of the vehicle VHm or when the vehicle VHm is stopped, the management server MS may output the start trigger TRG of the second business SB2 in order to verify states (verification of tire air pressure, oil verification, battery verification, travel distance verification, or external appearance verification) of the vehicle VHm.

For example, the arbitrary predictor is formed inside the management server MS. The arbitrary predictor may be formed outside the management server MS. The arbitrary predictor predicts an occurrence of a service business SB to the vehicle VHm according to machine learning using a provision history (a time slot and a place) of the service business SB. The arbitrary predictor may predict an occurrence of a service business SB at a point of attention by an infrastructure sensor according to machine learning using the provision history of the service business SB. The point of attention by the infrastructure sensor is set based on, for example, a detection range of the infrastructure sensor and map information. When the occurrence of the service business SB is predicted, the arbitrary predictor formed inside the management server MS outputs the start trigger TRG. The arbitrary predictor formed outside of the management server MS transmits a signal corresponding to the start trigger TRG to the management server MS.

Hereinafter, for convenience of description, the start trigger TRG of the first business SB1 to the vehicle VHm will also be referred to as a "start trigger TRG_SB1" and the start trigger TRG of the second business SB2 to the vehicle VHm will also be referred to as a "start trigger TRG SB2".

### 1-4. Request for close of service business SB

The service business SB by the operator OPn is brought to a close with a dissipation, a resolution, or the like of a cause that started the service business SB. Alternatively, the service business SB by the operator OPn is brought to a close due to an active declaration of intent from the operator OPn. The second business SB which is started every time a predetermined period of time elapses is brought to a close when an engagement time of the operator OPn to the business reaches a period of time set in advance.

When the service business SB approaches a close, a request for close RFC of the service business SB is output. Examples of an output source of the request for close RFC include the vehicle VHm, the operator OPn, and the management server MS. In other words, output sources of the start trigger TRG other than the arbitrary predictor are exemplified as output sources of the request for close RFC.

For example, the object of the service business SB (hereinafter, also referred to as a "vehicle VH_SB") outputs the request for close RFC of the service business SB with a dissipation, a resolution, or the like of a cause that started the service business SB. An example of a dissipation of the cause that started the service business SB is, in a case where the service business SB (the second business SB2) is started when a passenger having stood up inside the vehicle VHm is recognized, a recognition that the passenger has sat down. Another example of a dissipation of the cause that started the service business SB is, in a case where the service business SB (the second business SB2) at a point of attention of an infrastructure sensor is started, the vehicle VH_SB moving outside of a range of an angle of view of the infrastructure sensor.

An example of a resolution of the cause that started the service business SB is, in a case where the start of the service business SB (the second business SB2) is caused by a detection of a large amount of movement by the vehicle VHm in a lateral direction, a verification by the operator OPn that the motion by the vehicle VH_SB was not problematic (for example, a vehicle motion for avoiding a plurality of vehicles parked on the street).

### 2. Features of embodiment

When the start trigger TRG of the service business SB to the vehicle VHm has been output, the management server MS selects an operator OPn to which the service business SB is to be assigned from the plurality of operators OP. Hereinafter, for convenience of description, the operator OPn to which the service business SB has been assigned will also be referred to as an "operator OP_SB". In addition, the operator OPn to which the first business SB1 is assigned will also be referred to as an "operator OP_SB1" and the operator OPn to which the second business SB2 is assigned will also be referred to as an "operator OP_SB2".

Let us now consider the display DPn being monitored by a candidate of the operator OP_SB1 when the start trigger TRG_SB1 to the vehicle VHm has been output. An operator OPn standing by to engage in the service business SB and an operator OPn (in other words, the operator OP_SB2) engaged in the second business SB2 are assumed as candidates of the operator OP_SB1. The former is an operator OPn in a state of being capable of accepting the first business SB1 to be performed in accordance with the start trigger TRG_SB 1 as a new service business SB. The latter is an operator OPn in a state of being capable of switching from the second business SB2 that the operator OPn is currently engaged in to the first business SB1 to be performed in accordance with the start trigger TRG_SB1.

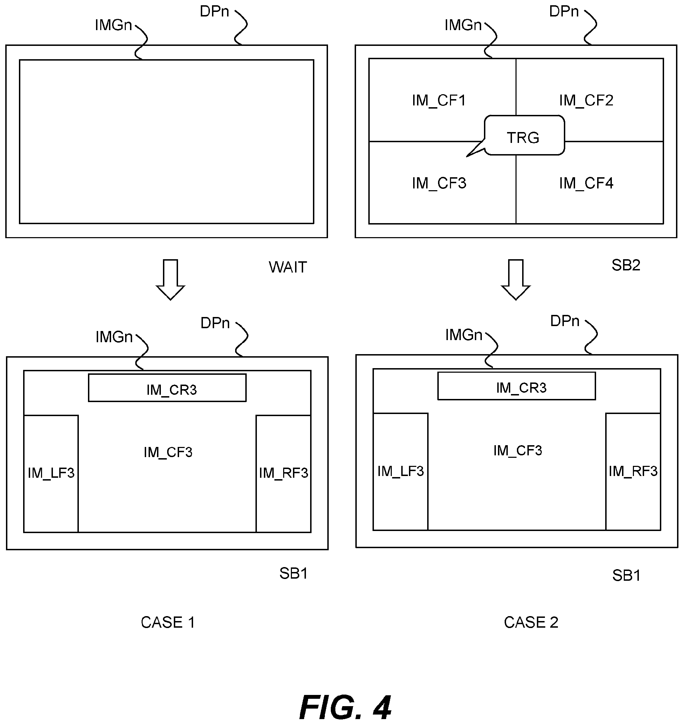

"CASE 1" shown in Fig. 4 represents an example of an image IMGn that is output from the display DPn when the first business SB1 to the vehicle VH3 is assigned to the operator OPn standing by to engage in the service business SB. "CASE 2" shown in Fig. 4 represents an example of an image IMGn that is output from the display DPn when the first business SB1 to the vehicle VH3 is assigned to the operator OPn engaged in the second business SB2 to the vehicle VH3.

When "CASE 1" and "CASE 2" are compared with each other, it is expected that the latter enables surroundings and the like of the vehicle VH3 to be comprehended more promptly than the former. This is because, since the operator OPn has already been engaged in the second business SB2 to the vehicle VH3 before being assigned the first business SB1 to the vehicle VH3, time will not be required to comprehend the surroundings and the like of the vehicle VH3.

Based on such a perspective, in the embodiment, when the start trigger TRG_SB1 of the first business SB1 to the vehicle VHm is output, a determination is made as to whether or not there is an operator OPn already engaged in the second business SB2 to the vehicle VHm. In addition, when it is determined that there is an operator OPn already engaged in the second business SB2 to the vehicle VHm, the first business SB1 is preferentially assigned to the operator OPn. It is expected that a contribution is to be made towards smoothly running the remote service by performing such preferential assignments.

An issue which may arise at this point is a presence of an operator OPn having been engaged in the second business SB2 to the vehicle VHm until just before the output of the start trigger TRG_SB1 of the first business SB1 to the vehicle VHm. The output of the request for close RFC is detected by the management server MS in a similar manner to the output of the start trigger TRG. When the request for close RFC is detected, the management server MS accepts the request for close RFC. In addition, the management server MS brings the service business SB to the vehicle VHm corresponding to the request for close RFC to a close and transmits permission information of the request for close RFC to a terminal operated by the operator OPn engaged in the service business SB.

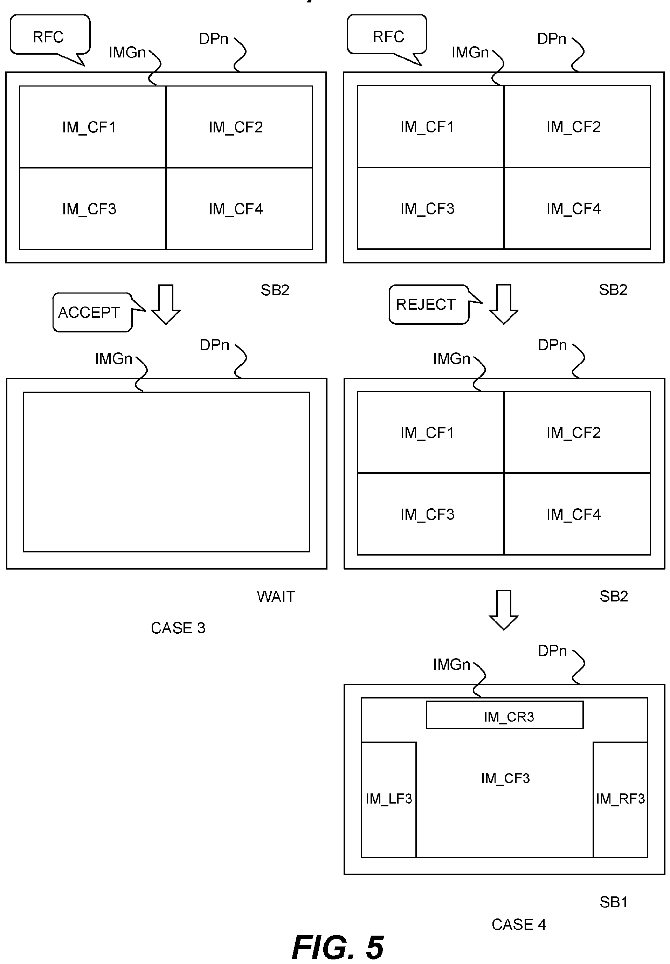

Therefore, when the request for close RFC is output from an object of the second business SB2 (hereinafter, also referred to as a "vehicle VH_SB2") to the vehicle VHm or from the operator OPn having been engaged in the second business SB2 to the vehicle VHm, the operator OPn ends up being dismissed from the second business SB2. "CASE 3" shown in Fig. 5 represents an example of an image IMGn that is output from the display DPn when the request for close RFC to the second business SB2 (hereinafter, also referred to as a "request for close RFC_SB2") is accepted. In this example, with the acceptance of the request for close RFC_SB2, a switch is made to the image IMGn for standing by to engage in the service business SB.

In this case, when the start trigger TRG_SB1 of the first business SB 1 to the vehicle VHm is output immediately after release from the second business SB2 to the vehicle VHm, the preferential assignment described earlier cannot be performed. In consideration thereof, in the embodiment, when an output of the request for close RFC_SB2 to the vehicle VHm is detected, a determination is made utilizing functions of an arbitrary predictor as to whether or not a start of the first business SB 1 to the vehicle VHm is expected. In addition, when it is determined that the start of the first business SB1 is expected, acceptance of the request for close RFC_SB2 is rejected.

"CASE 4" shown in Fig. 5 represents an example of an image IMGn that is output from the display DPn when acceptance of the request for close RFC_SB2 is rejected. In this example, with the rejection of acceptance of the request for close RFC_SB2, a same image IMGn as prior to the output of the request for close RFC_SB2 is output from the display DPn. Therefore, in "CASE 4", when the start trigger TRG_SB1 to the vehicle VHm is output in the near future, the first business SB 1 to the vehicle VHm can be preferentially assigned to the operator having rejected acceptance of the request for close RFC_SB2.

Hereinafter, the management method and the management apparatus according to the embodiment will be described in greater detail.

### 3. Management apparatus of remote service

### 3-1. First configuration example

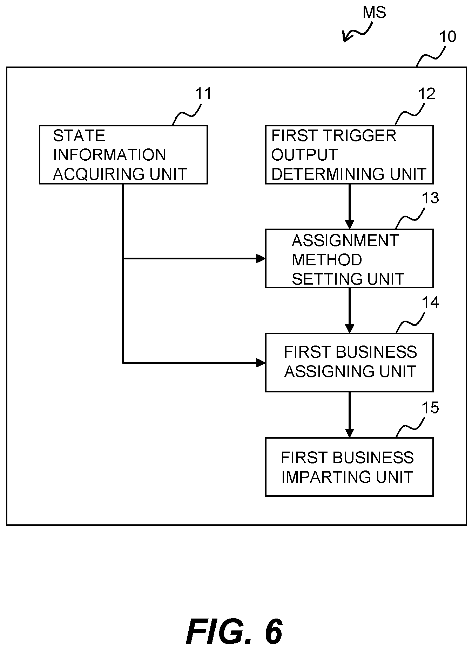

Fig. 6 is a block diagram showing a first functional configuration example of a processor 10 of the management server MS particularly related to the embodiment. In the example shown in Fig. 6, the processor 10 includes a state information acquiring unit 11, a first trigger output determining unit 12, an assignment method setting unit 13, a first business assigning unit 14, and a first business imparting unit 15. Each function of the blocks is realized as the processor 10 executes a remote service program.

The state information acquiring unit 11 acquires information related to a present state of the plurality of vehicles VH and the plurality of operators OP. For example, information related to the present state of the plurality of vehicles VH includes information on an operating state and information on a provision state of the service business SB. The operating state is divided into a state where a drive source (for example, a motor or an engine) of the vehicle VHm is in operation and a state where the drive source is not in operation. The provision state is divided into a state where the service business SB is being provided and a state where the service business SB is not being provided. When the service business SB is being provided to the vehicle VHm, information on a type (in other words, the first business SB1 and the second business SB2) of the service business SB being provided is added to the information on the provision state.

Information related to the present state of the plurality of operators OP includes information on an engagement state to the service business SB. The engagement state is divided into a state of standby for engagement in the service business SB and a state of being engaged in the service business SB. When the operator OPn is engaged in the service business SB, information on a type (in other words, the first business SB1 and the second business SB2) of the service business SB that the operator OPn is engaged in is added to the information on the present state. When the operator OPn is engaged in the service business SB, unique information (for example, ID information) of the object of the service business SB (in other words, the vehicle VH_SB) is added to the information on the engagement state. As will be understood from the description of Fig. 3, the total number of objects of the second business SB2 (in other words, the vehicle VH_SB2) is at least one.

The state information acquiring unit 11 transmits information related to the present state acquired by the state information acquiring unit 11 to the assignment method setting unit 13 and the first business assigning unit 14.

The first trigger output determining unit 12 determines whether or not a start trigger TRG_SB1 to the vehicle VHm has been output. As already described, output sources of the start trigger TRG include the vehicle VHm, the operator OPn, the management server MS, and an arbitrary predictor. When the output of the start trigger TRG_SB1 is detected, the first trigger output determining unit 12 transmits unique information (for example, ID information) of the vehicle (hereinafter, also referred to as a "vehicle VH_TRG_SB1") having output the start trigger TRG_SB1 to the assignment method setting unit 13.

The assignment method setting unit 13 sets, based on information related to the present state of the plurality of vehicles VH received from the state information acquiring unit 11 and unique information of the vehicle VH_TRG_SB1 received from the first trigger output determining unit 12, an assignment method of the first business SB1 to the vehicle VH_TRG_SB1. Specifically, the assignment method setting unit 13 determines whether or not the vehicle VH_TRG_SB1 is included in the present object (in other words, the vehicle VH_SB2) of the second business SB2. The determination is made by collating the unique information of the vehicle VH_TRG_SB1 with the unique information of the vehicle VH_SB2.

When it is determined that the vehicle VH_TRG_SB1 is included in the vehicle VH_SB2, "preferential assignment" is set as the assignment method. When it is determined that the vehicle VH_TRG_SB1 is not included in the vehicle VH_SB2, "regular assignment" is set as the assignment method. The assignment method setting unit 13 transmits information on the set assignment method and the unique information of the vehicle VH_TRG_SB1 to the first business assigning unit 14.

The first business assigning unit 14 selects, based on information related to the present state of the plurality of operators OP received from the state information acquiring unit 11 and information on an assignment method and the unique information of the vehicle VH_TRG_SB1 received from the assignment method setting unit 13, an operator OPn to be placed in charge of the first business SB1 to the vehicle VH_TRG_SB1.

Let us consider a case where "preferential assignment" is set as the assignment method. In this case, based on the information related to the present state of the plurality of operators OP and the unique information of the vehicle VH_TRG_SB1, an operator OP_SB2 already engaged in the second business SB2 to the vehicle VH_TRG_SB1 is specified. The specified operator OP_SB2 is selected as the operator OP_SB1 to be placed in charge of the first business SB1 to the vehicle VH_TRG_SB1. With the rejection of the request for close of the second business SB2 to the vehicle VHm, when there is an operator standing by to start the first business SB1 to the vehicle VHm, the operator is specified. The specified operator OP_SB2 is desirably selected as the operator OP_SB1 to be placed in charge of the first business SB1 to the vehicle VH_TRG_SB1.

Let us consider a case where "regular assignment" is set as the assignment method. In this case, for example, based on information related to the present state of the plurality of operators OP, a plurality of operators OP on standby for the service business SB are set as candidates of the operator OP_SB1. In addition, an operator to be placed in charge of the first business SB1 to the vehicle VH_TRG_SB1 is selected from among the candidates.

Note that known methods can be applied as a selection method of the operator OP_SB1 in a case where "regular assignment" is set. For example, according to a known method, candidates of the operator OP_SB1 may be narrowed down based on a length of a standby time (operating rate) for the service business SB, proficiency (frequency of experience) in the service business SB, and the like of the candidates.

The first business imparting unit 15 transmits information necessary to start the first business SB1 to the vehicle VH_TRG_SB1 to the terminal operated by the operator OP_SB1 selected by the first business assigning unit 14. Examples of the information necessary to start the first business SB1 include a peripheral image of the vehicle VH_TRG_SB1.

In addition, the first business imparting unit 15 transmits, to the terminal, information notifying that a transition has been made from the second business SB2 to the vehicle VH_TRG_SB1 to the first business SB1 to the vehicle VH_TRG_SB1. The first business imparting unit 15 further transmits, to the terminal, information which enables an operation of apparatuses (for example, the steering wheel, pedals, the gear shift, and turn signals) related to travel of the vehicle VH_TRG_SB1.

Furthermore, when the operator OP_SB1 is selected by the first business assigning unit 14, the first business imparting unit 15 updates information related to the present state of the operator OP_SB1. Specifically, information on a type of service business SB that the operator OP_SB1 is engaged in is updated. Furthermore, when the first business SB1 by the operator OP_SB1 is started, the first business imparting unit 15 updates information related to the present state of the plurality of vehicles VH. Specifically, information on a type of service business SB being provided is updated.

### 3-2. First processing example

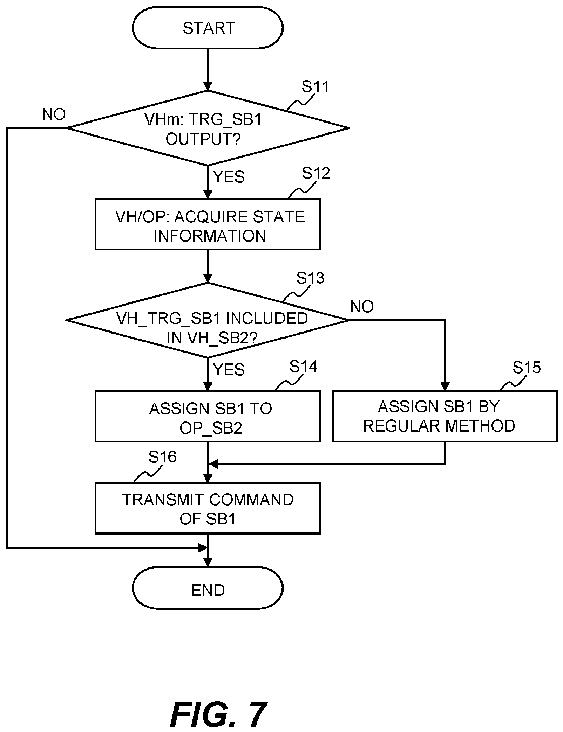

Fig. 7 is a flow chart showing a flow of first processing particularly related to the embodiment by the management server MS (processor 10). The routine shown in Fig. 7 is repetitively executed in, for example, predetermined control cycles.

In the routine shown in Fig. 7, first, whether or not the start trigger TRG_SB1 has been output is determined (step S11). For example, when the processor 10 receives a predetermined signal from the output source of the start trigger TRG, it is determined that the start trigger TRG_SB1 has been output. When the determination result of step S11 is negative, the present processing is brought to a close.

When the determination result of step S11 is positive, information related to a present state of the plurality of vehicles VH and the plurality of operators OP is acquired (step S12). Information related to the present state is stored in, for example, a database of the management server MS and the processor 10 acquires latest information from the database.

Following the processing in step S12, whether or not the vehicle (in other words, the vehicle VH_TRG_SB1) having output the start trigger TRG_SB1 is included in the present object (in other words, the vehicle VH_SB2) of the second business SB2 is determined (step S13). The determination of step S13 is made by, for example, collating the unique information of the vehicle VH_TRG_SB1 with the unique information of the vehicle VH_SB2.

When the determination result of step S13 is positive, the first business SB1 to the vehicle VH_TRG_SB1 is assigned to the operator OP_SB2 engaged in the second business SB2 to the vehicle VH_TRG_SB1 (step S14). On the other hand, when the determination result of step S13 is negative, assignment of the first business SB1 is performed according to a known method (step S15). In step S15, for example, a plurality of operators OP on standby for the service business SB are considered candidates of the operator OP_SB1 and a single operator is selected from among the candidates. In addition, the first business SB1 to the vehicle VH_TRG_SB1 is assigned to the selected operator.

Following the processing in step S14 or S15, an execution command of the first business SB1 to the vehicle VH_TRG_SB1 is transmitted to a computer of the selected operator (step S16). The execution command includes information necessary for starting the first business SB1, information notifying that a transition has been made to the first business SB1, and information which enables operations of apparatuses related to travel of the vehicle VH_TRG_SB1.

### 3-3. Second configuration example

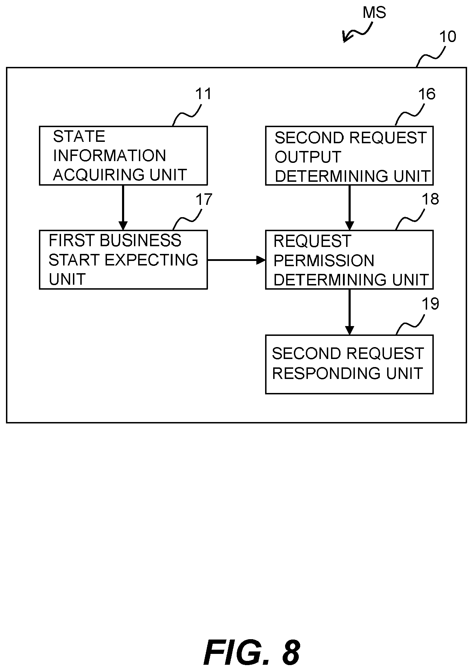

Fig. 8 is a block diagram showing a second functional configuration example of the processor 10 of the management server MS particularly related to the embodiment. In the example shown in Fig. 8, in addition to the state information acquiring unit 11, the processor 10 includes a second request output determining unit 16, a first business start expecting unit 17, a request permission determining unit 18, and a second request responding unit 19. Each function of the blocks is realized as the processor 10 executes a remote service program.

The second request output determining unit 16 determines whether or not a request for close RFC to the second business SB2 (hereinafter, also referred to as a "request for close RFC_SB2") has been output. As already described, output sources of the request for close RFC include the vehicle VHm, the operator OPn, and the management server MS. When the output of the request for close RFC_SB2 is detected, the second request output determining unit 16 transmits unique information (for example, ID information) of the vehicle (hereinafter, also referred to as a "vehicle VH_RFC_SB2") having output the request for close RFC_SB2 to the request permission determining unit 18.

The first business start expecting unit 17 expects a start of the first business SB 1 to the vehicle VHm based on information related to the present state of the plurality of vehicles VH received from the state information acquiring unit 11. Examples of information for making the expectation include information related to a vehicle state such as a position, a speed, or an acceleration of the vehicle VHm, route information such as a lane currently being traveled by the vehicle VHm or a lane scheduled to be traveled in the future, and provision history information of the first business SB1 to the vehicle VHm. These pieces of information are added to the information related to the present state. When the vehicle VHm is a ride-sharing vehicle such as a bus, information on an operation schedule (route, position of stops, arrival time at the stops, dwell time at the stops, and the like) is desirably added to the information related to the present state.

Time point information and weather information (for example, weather, temperature, wind speed, and the like) around the vehicle VHm is desirably further added to the information related to the present state. According to the time point information and the weather information, a decline in accuracy of recognition of an object around the vehicle VHm can be predicted and, therefore, a start of the first business SB 1 can be expected. In addition, traffic information (for example, congestion information) around the vehicle VHm is desirably added to the information related to the present state. According to the traffic information, an occurrence of a case where a determination by an operator OPn (human) based on driving experience and driving knowledge is required can be predicted and, therefore, a start of the first business SB 1 can be expected.

When a start of the first business SB 1 to the vehicle VHm is expected, the first business start expecting unit 17 generates information on a time point at which the start of the first business SB 1 is expected and transmits the generated information to the request permission determining unit 18.

When the request permission determining unit 18 receives unique information of the vehicle VH_RFC_SB2 from the second request output determining unit 16, the request permission determining unit 18 determines whether or not to permit a request for close RFC_SB2 of the second business SB2 to the vehicle VH_RFC_SB2. In the determination, for example, a presence or absence of information of a time point at which a start of the first business SB 1 to the vehicle VH_RFC_SB2 is expected is determined. When information on an expected time point is absent, the request for close RFC_SB2 is permitted. On the other hand, when information on an expected time point is present, a time difference between the expected time point and a time point of reception of the unique information of the vehicle VH_RFC_SB2 is calculated.

The time difference corresponds to a time period during which the operator OPn stands by for a start of the first business SB1 to occur in the future. In the embodiment, a threshold corresponding to a standby time that is permissible by the operator OPn is set. In addition, when the time difference is equal to or shorter than the threshold (for example, several seconds to several tens of seconds), the request for close RFC_SB2 is rejected. The request permission determining unit 18 transmits a result of the permission determination of the request for close RFC_SB2 to the second request responding unit 19.

Based on the result of the permission determination of the request for close RFC_SB2 received from the request permission determining unit 18, the second request responding unit 19 generates information to be transmitted to the operator OPn engaged in the second business SB2 corresponding to the request for close RFC_SB2. The information generated by the second request responding unit 19 is permission information or rejection information. The permission information at least includes information to the effect that the request for close RFC_SB2 is accepted. The permission information may include information necessary for standing by for a service business SB or information necessary for starting a service business SB other than the second business SB2 to the vehicle VH_RFC_SB2.

The rejection information at least includes information to the effect that acceptance of the request for close RFC_SB2 is rejected. The rejection information may include information on a time period of standby for acceptance of the request for close RFC_SB2. As the standby period, a period obtained by adding a predetermined margin to the time difference calculated by the request permission determining unit 18 is conceivable.

### 3-4. Second processing example

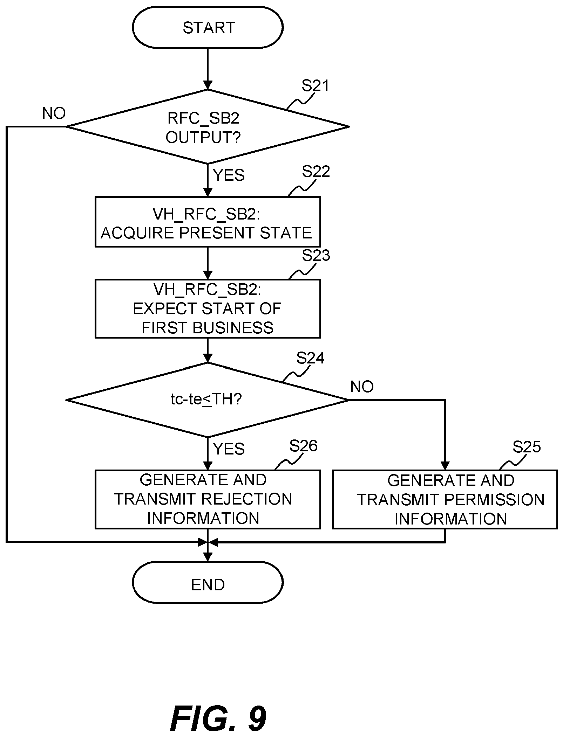

Fig. 9 is a flow chart showing a flow of second processing particularly related to the embodiment by the management server MS (processor 10). In a similar manner to the routine described with reference to Fig. 7, the routine shown in Fig. 9 is repetitively executed in predetermined control cycles.

In the routine shown in Fig. 9, first, whether or not the request for close RFC_SB2 has been output is determined (step S21). For example, when the processor 10 receives a predetermined signal from the output source of the request for close RFC_SB2, it is determined that the request for close RFC_SB2 has been output. When the determination result of step S11 is negative, the present processing is brought to a close.

When the determination result of step S21 is positive, information related to the present state of the vehicle VH_RFC_SB2 is acquired (step S22). Information related to the present state is stored in, for example, a database of the management server MS and the processor 10 acquires latest information from the database.

Following the processing in step S22, a start of the first business SB 1 to the vehicle having output the request for close RFC_SB2 (in other words, the vehicle VH_RFC_SB2) is expected (step S23). The expectation of the start of the first business SB 1 to the vehicle VH_RFC_SB2 is performed based on the information related to the present state of the vehicle VH_RFC_SB2 acquired in step S22. Examples of information related to the present state include the examples in the description of the first business start expecting unit 17. When a start of the first business SB 1 is expected, information on a time point at which the start of the first business SB 1 is expected is generated.

Following the processing in step S23, a determination is made as to whether or not a time difference between a current time point tc and a time point te at which the start of the first business SB 1 is expected is equal to or smaller than a threshold TH (step S24). The current time point tc may be a time point of reception by the processor 10 of a predetermined signal from the output source of the request for close RFC_SB2. When information on the expected time point te is absent or when it is determined that the time difference exceeds the threshold, processing of step S25 is performed. When it is determined that the time difference is equal to or shorter than the threshold, processing of step S26 is performed.

In the processing of step S25, permission information to the request for close RFC_SB2 is generated. The permission information at least includes information to the effect that the request for close RFC_SB2 is accepted. In the processing of step S26, rejection information is generated. The rejection information at least includes information to the effect that acceptance of the request for close RFC_SB2 is rejected. The permission information or the rejection information is transmitted to the terminal of the operator OPn engaged in the second business SB2 to the vehicle VH_RFC_SB2.

### 4. Effects

According to the embodiment described above, in the event where the start trigger TRG_SB1 to the vehicle VHm is output, when there is an operator OPn already engaged in the second business SB2 to the vehicle VH_TRG_SB1, the first business SB 1 to the vehicle VH_TRG_SB1 is assigned to the operator OPn. Therefore, the time required by the operator OP to comprehend surroundings of the vehicle VH_TRG_SB1 and the like can be reduced. It is expected that a contribution is to be made towards smoothly running the remote service by such a reduction in comprehension time.

In addition, according to the embodiment, when the request for close RFC_SB2 to the vehicle VHm is output, a determination is made as to whether or not a start of the first business SB1 to the vehicle VHm is expected. Furthermore, when it is determined that the start of the first business SB 1 is expected, acceptance of the request for close RFC_SB2 is rejected. Therefore, when the start trigger TRG_SB1 to the vehicle VHm is output in the near future, the first business SB 1 to the vehicle VHm can be preferentially assigned to the operator having rejected acceptance of the request for close RFC_SB2.

## Claims

1. A method for managing a remote service for mobile objects (VHm), the method comprising the steps of:
determining, when receiving a request for close (RFC) of a business (SB) of the remote service, whether or not to accept the request for close; and
transmitting a result of the determination of the request for close to a terminal of an operator (OPn) having transmitted the request for close, wherein:
the business of the remote service includes a first business which affects travel efficiency of an object for which the remote service is provided and a second business which does not affect the travel efficiency; and
the step of determining the request for close includes the steps of:
determining, when the request for close is a request for close of the second business, whether or not a start of the first business to the object of the second business is expected; and
rejecting acceptance of the request for close of the second business when it is determined that the start of the first business is expected.

2. The method according to claim 1,
wherein the step of determining the request for close further includes the steps of:
calculating a time point at which a start of the first business to the object of the second business is expected; and
calculating a time period during which an operator having transmitted a request for close of the second business stands by for a start of the first business based on the time point at which a start of the first business is expected,
wherein, when the time period to stand by for a start of the first business is equal to or shorter than a threshold, a determination that a start of the first business to the object of the second business is expected is made.

3. The method according to claim 1 or 2, further comprising the step of appointing, when a start trigger (TRG) of the first business is output while an operator having transmitted a request for close of the second business stands by for a start of the first business, the operator standing by for a start of the first business as an operator to take charge of the first business.

4. An apparatus for managing a remote service for mobile objects (VHm), comprising a processor (10) configured to manage the remote service,
wherein the processor is configured to execute:
processing to determine, when receiving a request for close (RFC) of a business (SB) of the remote service, whether or not to accept the request for close; and
processing to transmit a result of the determination of the request for close to a terminal of an operator (OPn) having transmitted the request for close, wherein:
the business of the remote service includes a first business which affects travel efficiency of an object for which the remote service is provided and a second business which does not affect the travel efficiency; and
in the processing to determine acceptance of the request for close, the processor is configured to execute:
processing to determine, when the request for close is a request for close of the second business, whether or not a start of the first business to the object of the second business is expected; and
processing to reject acceptance of the request for close of the second business when it is determined that the start of the first business is expected.

5. The apparatus according to claim 4,
wherein, in the processing to determine acceptance of the request for close, the processor is configured to execute:
processing to calculate a time point at which a start of the first business to the object of the second business is expected; and
processing to calculate a time period during which an operator having transmitted a request for close of the second business stands by for a start of the first business based on the time point at which a start of the first business is expected,
wherein, when the time period to stand by for a start of the first business is equal to or shorter than a threshold, a determination that a start of the first business to the object of the second business is expected is made.

6. The apparatus according to claim 4 or 5,
wherein the processor is configured to further execute processing to appoint, when a start trigger (TRG) of the first business is output while an operator having transmitted a request for close of the second business stands by for a start of the first business, the operator standing by for a start of the first business as an operator to take charge of the first business.
